# EUROPEAN PATENT APPLICATION

(11) **EP 4 814 308 A1**
(43) Date of publication of application: **30.09.2026**
(21) Application number: 24892772.5
(22) Date of filing: 20.06.2024
(51) Int. Cl.: F04B 49/20, E02F 9/20

(54) **ELECTRIC EXCAVATOR SYSTEM AND CONTROL METHOD**

(30) Priority: 24.11.2023 CN 202311586626
(71) Applicant: Sany Heavy Machinery Co., Ltd., Suzhou, Jiangsu 215300 (CN)
(72) Inventor: TONG, Ying, Suzhou, Jiangsu 215300 (CN); WU, Xianwei, Suzhou, Jiangsu 215300 (CN); LI, Xiaobo, Suzhou, Jiangsu 215300 (CN)
(74) Representative: Murgitroyd & Company
(86) International application number: PCT/CN2024/100262
(87) International publication number: WO 2025/107607

(57) **Abstract**

Disclosed are an electric excavator system and a control method therefor. The control method includes: acquiring a pump body pressure and a pilot pressure of each of the plunger pumps (1); determining a required flow rate of each of the plunger pumps (1) according to the pump body pressure and the pilot pressure; determining a preliminary calculated rotational speed of the motor (2) according to the required flow rate of each of the plunger pumps; determining a calculated rotational speed of the motor (2) according to the preliminary calculated rotational speed; determining a rotational speed adjustment strategy of the motor (2) according to the calculated rotational speed, and controlling the motor (2) to perform rotational speed adjustment according to the rotational speed adjustment strategy; determining a displacement adjustment strategy of each of the plunger pumps (1) according to the calculated rotational speed and the required flow rate of each of the plunger pumps (1), and controlling each corresponding plunger pump (1) to perform displacement adjustment according to the displacement adjustment strategy. This achieves optimal comprehensive efficiency of the plunger pump (1) and the motor (2) while keeping the flow rate of each of the plunger pumps (1) unchanged, resulting in lower energy consumption and longer endurance time under the same workload.

## Description

### CROSS-REFERENCE TO RELATED APPLICATIONS

The present application claims priority to Chinese Patent Application No. 202311586626.0, filed on November 24, 2023, and entitled "ELECTRIC EXCAVATOR SYSTEM AND CONTROL METHOD", the entire contents of which are hereby incorporated by reference in its entirety.

### TECHNICAL FIELD

The present invention relates to the technical field of excavators, and in particular, to an electric excavator system and a control method therefor.

### BACKGROUND

With increasing social emphasis on environmental protection, traditional excavators are no longer suitable for new environmental requirements, and electric excavators are gradually becoming a new development direction.

Current pure electric excavators, due to characteristics of high weight and high cost of power batteries, suffer from a problem of short endurance time during use. Most existing technologies adopt control strategies of traditional diesel engines, under which a rotational speed is maintained constant during operation and power regulation is performed solely by adjusting the main pump displacement, thereby leading to significant limitations in efficiency regulation of the electric excavator power system and causing energy waste and increased vehicle energy consumption.

### SUMMARY

A main objective of the present invention is to provide an electric excavator system and a control method therefor, aiming to solve the problem of significant limitations in power system efficiency of the electric excavator.

To achieve the above objective, the present invention provides a control method for an electric excavator system, where the electric excavator system includes a motor and a plurality of plunger pumps drivingly connected to the motor, and
the control method includes:
acquiring a pump body pressure and a pilot pressure of each of the plunger pumps;
determining a required flow rate of each of the plunger pumps according to the pump body pressure and the pilot pressure of each of the plunger pumps;
determining a preliminary calculated rotational speed of the motor according to the required flow rate of each of the plunger pumps;
determining a calculated rotational speed of the motor according to the preliminary calculated rotational speed;
determining a rotational speed adjustment strategy of the motor according to the calculated rotational speed, and controlling the motor to perform rotational speed adjustment according to the rotational speed adjustment strategy; and
determining a displacement adjustment strategy of each of the plunger pumps according to the calculated rotational speed and the required flow rate of each of the plunger pumps, and controlling each corresponding plunger pump to perform displacement adjustment according to the displacement adjustment strategy of each of the plunger pumps.

Optionally, the determining the preliminary calculated rotational speed of the motor according to the required flow rate of each of the plunger pumps includes:
selecting a maximum value from a plurality of required flow rates as a reference flow rate; and
calculating the preliminary calculated rotational speed according to the reference flow rate.

Optionally, the calculating the preliminary calculated rotational speed according to the reference flow rate includes:
acquiring a set displacement of a plunger pump corresponding to the reference flow rate;
selecting a maximum value from the set displacement as a reference displacement; and
calculating the preliminary calculated rotational speed according to the reference flow rate and the reference displacement.

Optionally, the determining the calculated rotational speed of the motor according to the preliminary calculated rotational speed includes:
determining a weight adjustment coefficient;
acquiring a limiting parameter of the motor; and
determining the calculated rotational speed of the motor according to the preliminary calculated rotational speed, the weight adjustment coefficient, and the limiting parameter.

Optionally, the determining the weight adjustment coefficient includes:
acquiring a starting adjustment pressure and a maximum pressure of a system composed of the plurality of plunger pumps;
determining an average pressure of each of the plunger pumps according to the pump body pressure of each of the plunger pumps; and
determining the weight adjustment coefficient according to the average pressure of each of the plunger pumps and the starting adjustment pressure.

Optionally, the determining the weight adjustment coefficient according to the average pressure of each of the plunger pumps and the starting adjustment pressure includes:
when the average pressure of each of the plunger pumps is greater than the starting adjustment pressure, determining the weight adjustment coefficient as a first fixed value;
when the average pressure of each of the plunger pumps is less than the starting adjustment pressure, calculating and determining the weight adjustment coefficient according to the average pressure of each of the plunger pumps, the starting adjustment pressure, and the maximum pressure.

Optionally, the limiting parameter includes a limiting torque and a limiting power of the motor.

Optionally, the determining the rotational speed adjustment strategy of the motor according to the calculated rotational speed, and controlling the motor to perform rotational speed adjustment according to the rotational speed adjustment strategy includes:
acquiring a current rotational speed of the motor;
successively increasing from the current rotational speed by a preset rotational speed step value to obtain a plurality of process target rotational speeds between the current rotational speed and the calculated rotational speed; and
controlling the motor to change rotational speed stepwise from the current rotational speed to the calculated rotational speed according to the plurality of process target rotational speeds.

Optionally, the determining the displacement adjustment strategy of each of the plunger pumps according to the calculated rotational speed and the required flow rate of each of the plunger pumps, and controlling each corresponding plunger pump to perform displacement adjustment according to the displacement adjustment strategy of each of the plunger pumps includes:
acquiring and determining a calculated displacement of each of the plunger pumps and a plurality of process target displacements according to the calculated rotational speed, the plurality of process target rotational speeds, and the required flow rate of each of the plunger pumps;
calculating and determining a calculated current of a solenoid valve of each of the plunger pumps and a plurality of target currents according to the calculated displacement of each of the plunger pumps and the plurality of process target displacements; and
controlling a current of the solenoid valve of each of the plunger pumps to change stepwise to the calculated current according to the plurality of target currents.

The present invention further provides an electric excavator system, which includes:
a plurality of plunger pumps, each of the plunger pumps being provided with a solenoid valve;
a motor, configured to control rotational speeds of the plurality of plunger pumps; and
a control device, electrically connected to the plurality of plunger pumps and the motor, wherein the control device comprises a memory, a processor, and a control program for the electric excavator system stored on the memory and executable on the processor, and the control program for the electric excavator system is configured to implement the steps of the control method for the electric excavator system according to any one of claims 1 to 9.

In the control method for the electric excavator system provided by the present invention, the plurality of plunger pumps are connected in series and controlled by a same motor. A preliminary calculated rotational speed is obtained by comprehensively considering the required flow rates of the plurality of plunger pumps, and the calculated rotational speed is then obtained by adjusting the preliminary calculated rotational speed, so that the calculated rotational speed may not only meet the high-efficiency operation of the motor but also keep each of the plunger pumps within a high-efficiency operating range with relatively large displacement. This achieves optimal comprehensive efficiency of the plunger pumps and the motor by controlling the rotational speed and the solenoid valve while keeping the flow rate of each of the plunger pumps unchanged, resulting in lower energy consumption and longer endurance time under the same workload.

### BRIEF DESCRIPTION OF THE DRAWINGS

FIG. 1 is a schematic structural diagram of an electric excavator system provided by an embodiment of the present invention.
FIG. 2 is a flowchart of a control method for an electric excavator system provided by an embodiment of the present invention.
FIG. 3 is a flowchart of an embodiment of the control method for an electric excavator system in FIG. 2.

### Description of Reference Numerals:

| Numeral | Name | Numeral | Name |
|---|---|---|---|
| 100 | Electric excavator system | 2 | Motor |
| 1 | Plunger pump | 3 | Pressure sensor |

The realization of the objectives, functional features, and advantages of the present invention will be further described below in conjunction with the embodiments and with reference to the accompanying drawings.

### DETAILED DESCRIPTION OF THE EMBODIMENTS

The technical solutions in the embodiments of the present invention will be clearly and completely described below with reference to the accompanying drawings in conjunction with the embodiments of the present invention. Obviously, the described embodiments are only a part of the embodiments of the present invention, rather than all of them. Based on the embodiments in the present invention, all other embodiments obtained by a person of ordinary skill in the art without inventive efforts shall fall within the protection scope of the present invention.

It should be noted that if any directional indications (such as up, down, left, right, front, back, etc.) are involved in the embodiments of the present invention, these directional indications are intended only to explain relative positional relationships, motion states, or the like, between various components in a specific posture (as shown in the drawings). If the specific posture changes, the directional indications will change accordingly.

Furthermore, if there are descriptions involving "first", "second", etc. in the embodiments of the present invention, such descriptions of "first", "second", or the like are intended merely for descriptive purposes, and should not be construed as indicating or implying relative importance or implicitly specifying the quantity of the indicated technical features. Thus, features defined with "first", "second" may explicitly or implicitly include at least one such feature. In addition, the meaning of "and/or" appearing throughout the text includes three alternative schemes. Taking "A and/or B" as an example, it includes scheme A, or scheme B, or a scheme where both A and B are satisfied. Furthermore, the technical solutions of various embodiments can be combined with each other, but this must be based on what can be achieved by a person of ordinary skill in the art. When the combination of technical solutions is contradictory or unachievable, it should be considered that such a combination does not exist and is not within the protection scope claimed by the present invention.

With increasing social emphasis on environmental protection, traditional excavators are no longer suitable for new environmental requirements, and electric excavators are gradually becoming a new development direction.

Currently, most pure electric excavators directly adopt control strategies of traditional diesel engines, under which a rotational speed is maintained constant during operation and power regulation is performed solely by adjusting the main pump displacement. This severely restricts efficiency regulation of the electric excavator power system, resulting in energy waste and increased vehicle energy consumption, thereby leading to short endurance time for the entire vehicle. To ensure normal operation of pure electric excavators, it is necessary to increase battery weight, which further increases the overall vehicle weight and cost.

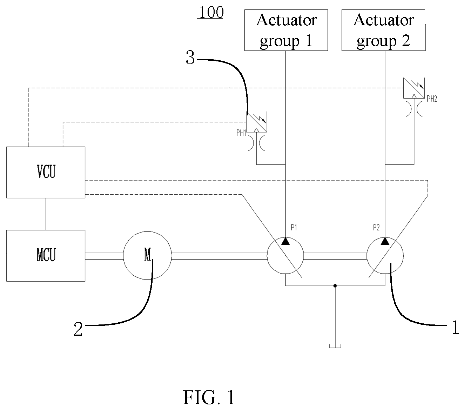

Please refer to FIG. 1. The present invention provides an electric excavator system 100, which includes a plurality of plunger pumps 1 and a motor 2. Each of the plunger pumps 1 is provided with a solenoid valve; and the motor 2 is configured to control rotational speeds of the plurality of plunger pumps 1.

In the electric excavator system 100 provided by the present invention, a single motor 2 is used to control the plurality of plunger pumps 1 arranged in series. The plurality of plunger pumps 1 supply oil to different actuators respectively. Since different actuators have different operating states, required flow rates are inconsistent. By comprehensively considering operating efficiency of the motor 2 and the plurality of plunger pumps 1, the control of operating efficiency of the entire system is thereby facilitated.

It should be noted that in an operation of a plunger pump, displacement of the plunger pump and rotational speed of the motor are inversely proportional when required flow rate is constant. The displacement and the rotational speed respectively affect the operating efficiency of the motor 2 and the plunger pump 1. When the displacement increases, the efficiency of the plunger pump 1 increases, and when the rotational speed increases, the efficiency of the motor 2 increases. Therefore, it is necessary to simultaneously satisfy that the motor 2 operates within a maximum or relatively high rotational speed range and that the displacements of the plurality of plunger pumps 1 are all within relatively large ranges, which can maximize the operating efficiency of the entire system.

It should be noted that in this embodiment, the motor 2 simultaneously drives and controls the rotational speeds of the plurality of plunger pumps 1, causing the plunger pumps to generate corresponding flow rate and displacement.

Furthermore, the electric excavator system 100 further includes a plurality of pressure sensors 3, respectively arranged corresponding to the plurality of plunger pumps 1, so as to facilitate detection of pressures of the plunger pumps.

On the other hand, the electric excavator system 100 further includes a control device. The control device is electrically connected to the plurality of plunger pumps 1 and the motor 2, and is configured to control switching of the solenoid valves of the plunger pumps 1 and rotation of the motor 2.

Optionally, the control device includes a memory, a processor, and a control program for the electric excavator system stored in the memory. The processor executes the control program for the electric excavator system to implement the following control method for the electric excavator system:
acquiring a pump body pressure and a pilot pressure of each of the plunger pumps;
determining a required flow rate of each of the plunger pumps according to the pump body pressure and the pilot pressure of each of the plunger pumps;
determining a preliminary calculated rotational speed of the motor according to the required flow rate of each of the plunger pumps;
determining a calculated rotational speed of the motor according to the preliminary calculated rotational speed;
determining a rotational speed adjustment strategy of the motor according to the calculated rotational speed, and controlling the motor to perform rotational speed adjustment according to the rotational speed adjustment strategy; and
determining a displacement adjustment strategy of each of the plunger pumps according to the calculated rotational speed and the required flow rate of each of the plunger pumps, and controlling each corresponding plunger pump to perform displacement adjustment according to the displacement adjustment strategy of each of the plunger pumps.

Optionally, the determining the preliminary calculated rotational speed of the motor according to the required flow rate of each of the plunger pumps includes:
selecting a maximum value from a plurality of required flow rates as a reference flow rate; and
calculating the preliminary calculated rotational speed according to the reference flow rate.

Optionally, the calculating the preliminary calculated rotational speed according to the reference flow rate includes:
acquiring a set displacement of a plunger pump corresponding to the reference flow rate;
selecting a maximum value from the set displacement as a reference displacement; and
calculating the preliminary calculated rotational speed according to the reference flow rate and the reference displacement.

Optionally, the determining the calculated rotational speed of the motor according to the preliminary calculated rotational speed includes:
determining a weight adjustment coefficient;
acquiring a limiting parameter of the motor; and
determining the calculated rotational speed of the motor according to the preliminary calculated rotational speed, the weight adjustment coefficient, and the limiting parameter.

Optionally, the determining the weight adjustment coefficient includes:
acquiring a starting adjustment pressure and a maximum pressure of a system composed of the plurality of plunger pumps;
determining an average pressure of each of the plunger pumps according to the pump body pressure of each of the plunger pumps; and
determining the weight adjustment coefficient according to the average pressure of each of the plunger pumps and the starting adjustment pressure.

Optionally, the determining the weight adjustment coefficient according to the average pressure of each of the plunger pumps and the starting adjustment pressure includes:
when the average pressure of each of the plunger pumps is greater than the starting adjustment pressure, determining the weight adjustment coefficient as a first fixed value; and
when the average pressure of each of the plunger pumps is less than the starting adjustment pressure, calculating and determining the weight adjustment coefficient according to the average pressure of each of the plunger pumps, the starting adjustment pressure, and the maximum pressure.

Optionally, the limiting parameter includes a limiting torque and a limiting power of the motor.

Optionally, the determining the rotational speed adjustment strategy of the motor according to the calculated rotational speed, and controlling the motor to perform rotational speed adjustment according to the rotational speed adjustment strategy includes:
acquiring a current rotational speed of the motor;
successively increasing from the current rotational speed by a preset rotational speed step value to obtain a plurality of process target rotational speeds between the current rotational speed and the calculated rotational speed; and
controlling the motor to change rotational speed stepwise from the current rotational speed to the calculated rotational speed according to the plurality of process target rotational speeds.

Optionally, the determining the displacement adjustment strategy of each of the plunger pumps according to the calculated rotational speed and the required flow rate of each of the plunger pumps, and controlling each corresponding plunger pump to perform displacement adjustment according to the displacement adjustment strategy of each of the plunger pumps includes:
acquiring and determining a calculated displacement of each of the plunger pumps and a plurality of process target displacements according to the calculated rotational speed, the plurality of process target rotational speeds, and the required flow rate of each of the plunger pumps;
calculating and determining a calculated current of a solenoid valve of each of the plunger pumps and a plurality of target currents according to the calculated displacement of each of the plunger pumps and the plurality of process target displacements; and
controlling a current of the solenoid valve of each of the plunger pumps to change stepwise to the calculated current according to the plurality of target currents.

In the control method for the electric excavator system provided by the present invention, a plurality of the plunger pumps 1 are connected in series and controlled by the same motor 2. By comprehensively considering the required flow rates of the plurality of plunger pumps 1, a preliminary calculated rotational speed is obtained. By adjusting the preliminary calculated rotational speed, the preliminary calculated rotational speed may not only satisfy the high-efficiency operation of the motor, but also ensure that each of the plunger pumps 1 operates within a high-efficiency operating range with relatively large displacement. This achieves optimal comprehensive efficiency of the plunger pumps 1 and the motor 2 while maintaining the flow rate of each of the plunger pumps 1 unchanged, through controlling the rotational speed and the solenoid valve, resulting in lower energy consumption and longer endurance time under the same workload.

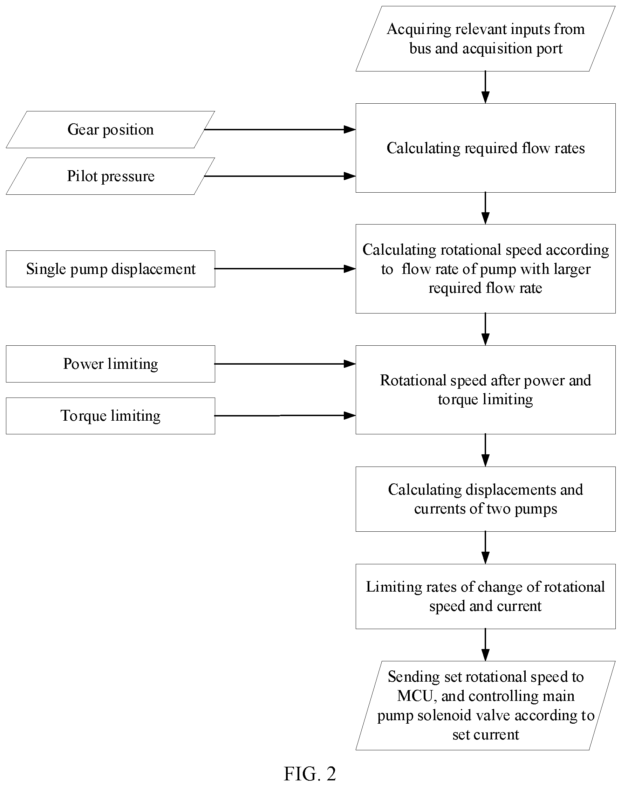

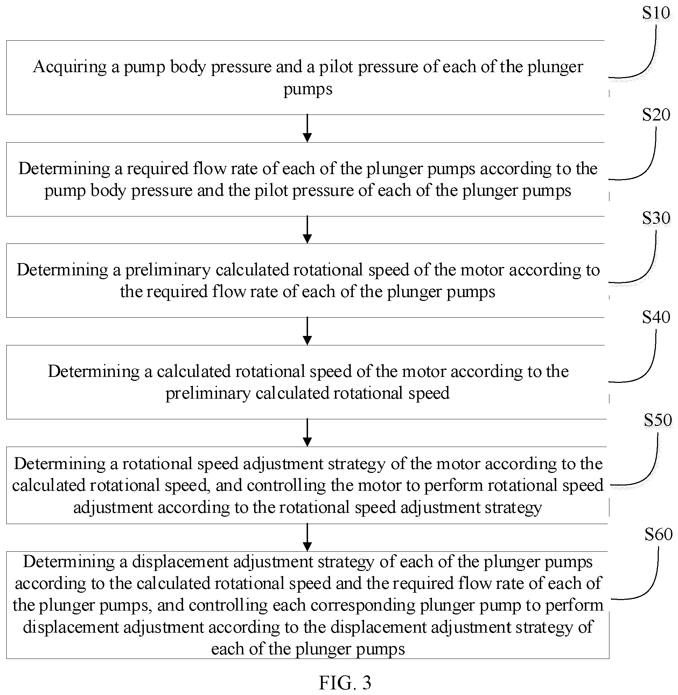

Please refer to Figures 2 to 3. The present invention further provides a control method for an electric excavator system. The control method includes:
S10, acquiring a pump body pressure and a pilot pressure of each of the plunger pumps.

The plurality of the plunger pumps 1 supply oil to different actuators respectively, such that the pump body pressures on the plurality of plunger pumps 1 differ, thereby resulting in different required operating states for different plunger pumps 1. Therefore, when controlling the electric excavator system, it is necessary to first acquire a current operating condition of each of the plunger pumps 1, and determine a state of each of the plunger pumps 1 at this time based on actual pump body pressure and pilot pressure.

It should be noted that the pump body pressure is obtained through a pressure sensor; while the pilot pressure is a preset reference value for each of the plunger pumps 1. During operation of the electric excavator, different actuators generate different pressure values, such that pump body pressures generated on respective plunger pumps 1 also differ. The pilot pressure is comprehensively considered so as to facilitate accurate subsequent control of the states of the plunger pumps 1.

S20, determining a required flow rate of each of the plunger pumps according to the pump body pressure and the pilot pressure of each of the plunger pumps.

After the pump body pressure and the pilot pressure are obtained, the required flow rate that the plunger pump 1 needs to achieve a series of action requirements at this time may be determined, so as to ensure that the required flow rate may respond to changes in pump body pressure.

It should be noted that in this embodiment, the required flow rate may be correlated with the pump body pressure and the pilot pressure according to actual test results, provided that the required flow rate of each plunger pump 1 may be determined based on the pump body pressure.

S30, determining a preliminary calculated rotational speed of the motor according to the required flow rate of each of the plunger pumps.

After the required flow rate of each of the plunger pumps 1 is obtained, the preliminary calculated rotational speed of the motor 2 may be determined based on the plurality of required flow rates, so as to facilitate control of the motor 2 according to the preliminary calculated rotational speed.

It should be noted that flow rate and rotational speed satisfy the following relationship:
$n = Q / q ,$
where the n is rotational speed, the Q is flow, and the q is displacement.

S40, determining a calculated rotational speed of the motor according to the preliminary calculated rotational speed.

Because the required flow rates among the plurality of plunger pumps 1 are different, resulting in different actually required rotational speeds. In order to facilitate improvement of control efficiency of the motor 2 for controlling the plurality of plunger pumps 1, the preliminary calculated rotational speed needs to be adjusted so that the motor 2 can not only satisfy efficiencies of the plurality of plunger pumps 1, but also operate within a rotational speed range of relatively high operating efficiency.

It should be noted that for a motor, the efficiency thereof is related to both rotational speed and torque. The operating efficiency is relatively high in an operating range with relatively large torque and relatively small rotational speed.

S50, determining a rotational speed adjustment strategy of the motor according to the calculated rotational speed, and controlling the motor to perform rotational speed adjustment according to the rotational speed adjustment strategy.

After the adjusted calculated rotational speed is obtained, a final control target that the motor 2 needs to achieve may be obtained according to the calculated rotational speed. The motor is controlled according to a preset adjustment strategy, such that the motor 2, when simultaneously controlling the plurality of plunger pumps 1, can still remain within a region of relatively high operating efficiency.

S60, determining a displacement adjustment strategy of each of the plunger pumps according to the calculated rotational speed and the required flow rate of each of the plunger pumps, and controlling each corresponding plunger pump to perform displacement adjustment according to the displacement adjustment strategy of each of the plunger pumps.

For each of the plunger pumps 1, the rotational speed has been acquired, and meanwhile, the required flow rate under a corresponding operating condition has also been determined. Based on this, a displacement of each of the plunger pumps 1 may be obtained. Then, according to different displacement requirements of each of the plunger pumps 1, the plunger pump 1 may be controlled to adjust the solenoid valve therein, thereby performing corresponding adjustment, such that each of the plunger pumps 1 also operates within an operating range of highest operating efficiency.

It should be noted that for a plunger pump, the larger the pressure and the larger the displacement, the higher the operating efficiency of the pump. Therefore, when the pressure of each of the plunger pumps is determined, the comprehensive efficiency of the plurality of plunger pumps 1 is maximized through displacement control.

In the control method for the electric excavator system provided by the present invention, a plurality of the plunger pumps 1 are connected in series and controlled by the same motor 2. By comprehensively considering the required flow rates of the plurality of plunger pumps 1, a preliminary calculated rotational speed is obtained. By adjusting the preliminary calculated rotational speed, the preliminary calculated rotational speed may not only satisfy the high-efficiency operation of the motor, but also ensure that each of the plunger pumps 1 operates within a high-efficiency operating range with relatively large displacement. This achieves optimal comprehensive efficiency of the plunger pumps 1 and the motor 2 while maintaining the flow rate of each of the plunger pumps 1 unchanged, through controlling the rotational speed and the solenoid valve, resulting in lower energy consumption and longer endurance time under the same workload.

Optionally, the step S30 includes:
S31, selecting a maximum value from a plurality of required flow rates as a reference flow rate.

In this embodiment, without considering displacement, the larger the required flow rate, the faster the rotational speed. According to a relationship among flow, displacement, and rotational speed, a higher calculated rotational speed may be achieved. Based on this, the operating efficiency of the motor 2 may be improved while satisfying requirements of the pump body.

S32. calculating the preliminary calculated rotational speed according to the reference flow rate.

After the maximum value as the reference flow rate is obtained, a calculation is performed using the maximum value to obtain the preliminary calculated rotational speed.

Specifically, the step S32 includes:
S321, acquiring a set displacement of a plunger pump corresponding to the reference flow rate.

After the reference flow rate is obtained, the corresponding plunger pump 1 has a set displacement. In order to facilitate calculation of the rotational speed required by the plunger pump 1 at this moment, it is therefore necessary to obtain the set displacement of the plunger pump 1.

S322, selecting a maximum value from the set displacement as a reference displacement.

Since the larger the displacement, the higher the operating efficiency of the plunger pump 1, and meanwhile, a variation amplitude of pump efficiency is much greater than that of motor efficiency, therefore, comprehensively considering a situation where system efficiency is highest, it is considered that making the pump operate under an operating condition with a large displacement may improve system efficiency. Therefore, it is necessary to use the maximum value among the set displacements as the reference displacement for calculating the rotational speed.

S323, calculating the preliminary calculated rotational speed according to the reference flow rate and the reference displacement.

Taking the maximum value as the reference flow rate may ensure a higher rotational speed of the motor as much as possible to guarantee higher operating efficiency of the motor 2. Meanwhile, taking the maximum displacement as the reference displacement may also ensure higher operating efficiency of the pump, thereby improving the operating efficiency of the entire system.

On the other hand, the step S40 includes:
S41, determining a weight adjustment coefficient.

After the preliminary calculated rotational speed is obtained, directly controlling the motor to rotate according to the preliminary calculated rotational speed may cause damage to the motor and fail to satisfy normal operation of the motor; therefore, weighted control of the motor is required to ensure normal operation of the motor.

S42, acquiring a limiting parameter of the motor.

By acquiring the limiting parameter of the motor 2, a baseline value for subsequent weighting is determined.

S43, determining the calculated rotational speed of the motor according to the preliminary calculated rotational speed, the weight adjustment coefficient, and the limiting parameter.

According to the limiting parameter and the preliminary calculated rotational speed, the preliminary calculated rotational speed is weighted onto the baseline value derived from the limiting parameter through a weighting method. This can ensure both high-efficiency operation of the motor 2 and safety of the motor 2.

Specifically, the step S41 includes:
S411, acquiring a starting adjustment pressure and a maximum pressure of a system composed of the plurality of plunger pumps.

The system composed of the plunger pumps 1 ensures normal operation of the entire system through the starting adjustment pressure and the maximum pressure. Therefore, before controlling the motor, a weight needs to be determined based on pressure conditions on the plunger pumps 1.

S412, determining an average pressure of each of the plunger pumps according to the pump body pressure of each of the plunger pumps.

The weight of the preliminary calculated rotational speed is determined according to the average pressure on each of the plunger pumps 1, so as to ensure that the preliminary calculated rotational speed can adapt to the average pressure on the plunger pump 1.

S413, determining the weight adjustment coefficient according to the average pressure of each of the plunger pumps and the starting adjustment pressure.

In this embodiment, the weight of the preliminary calculated rotational speed of the motor 2 is determined according to a relationship between the average pressure and the starting adjustment pressure, so as to ensure both the normal operation of the plurality of plunger pumps and the high-efficiency operation of the motor.

Specifically, the step S413 includes:
S4131, when the average pressure of each of the plunger pumps is greater than the starting adjustment pressure, determining the weight adjustment coefficient as a first fixed value.
S4132, when the average pressure of each of the plunger pumps is less than the starting adjustment pressure, calculating and determining the weight adjustment coefficient according to the average pressure of each of the plunger pumps, the starting adjustment pressure, and the maximum pressure.

Specifically, the calculating and determining the weight adjustment coefficient according to the average pressure of each of the plunger pumps, the starting adjustment pressure, and the maximum pressure satisfies the following relationship:
$k = \left({p}_{avg}-{p}_{sta}\right) / \left({p}_{max}-{p}_{sta}\right) ,$ where the k is the weight adjustment coefficient, the p_{avg} is the average pressure, the pₛₜₐ is the starting adjustment pressure, and the pₘₐₓ is the maximum pressure.

Optionally, the starting adjustment pressure satisfies the following relationship:
${p}_{sta} = tor / \left(2{q}_{max}\right) ,$

Where the qₘₐₓ is the reference displacement, that is, the maximum value of the set drift of the plunger pump 1 corresponding to the reference flow rate.

Additionally, the limiting parameter includes a limiting torque and a limiting power of the motor.

Specifically, in this embodiment, the step S43 satisfies the following relationship:
${n}_{c} = k * \left(pow/tor\right) + \left(1-k\right) {n}_{c ′} ,$
where the n_{c} is the calculated rotational speed, the k is the weight adjustment coefficient, pow is the limiting power, tor is the limiting torque, and the n_{c'} is the preliminary calculated rotational speed.

Furthermore, in this embodiment, when the average pressure is less than the starting adjustment pressure, the k is determined according to the average pressure.

When the average pressure is greater than the starting adjustment pressure, the k is zero, such that the calculated rotational speed equals the preliminary calculated rotational speed.

On the other hand, step S50 includes:
S51, acquiring a current rotational speed of the motor.
S52, successively increasing from the current rotational speed by a preset rotational speed step value to obtain a plurality of process target rotational speeds between the current rotational speed and the calculated rotational speed.
S53, controlling the motor to change rotational speed stepwise from the current rotational speed to the calculated rotational speed according to the plurality of process target rotational speeds.

In this embodiment, the motor 2 is controlled to change rotational speed from the current rotational speed to the calculated rotational speed in a stepwise manner. By controlling a change rate of rotational speed of the motor 2, efficiency of change of the motor 2 is ensued, and increased energy consumption caused by direct adjustment is avoided.

Optionally, the step S60 includes:
S61, acquiring and determining a calculated displacement of each of the plunger pumps and a plurality of process target displacements according to the calculated rotational speed, the plurality of process target rotational speeds, and the required flow rate of each of the plunger pumps.

According to the calculated rotational speed and the plurality of target rotational speeds, the target displacement corresponding to each rotational speed may be obtained.

S62, calculating and determining a calculated current of a solenoid valve of each of the plunger pumps and a plurality of target currents according to the calculated displacement of each of the plunger pumps and the plurality of process target displacements.

A control of the solenoid valve of the plunger pump 1 may be achieved according to the target displacement. Therefore, corresponding target currents are obtained, such that the plunger pump 1 adjust displacement to the target displacement.

S63, controlling a current of the solenoid valve of each of the plunger pumps to change stepwise to the calculated current according to the plurality of target currents.

In this embodiment, the rotational speed of the motor 2 is adjusted stepwise, and the solenoid valve of the corresponding plunger pump 1 is also adjusted synchronously and stepwise, thereby achieving coordinated adjustment of both, so as to satisfy the required flow rate while ensuring the overall operating efficiency of the entire system.

It should be noted that a relationship between the target current and the target displacement satisfies the following:
$I = {I}_{min} + \left({q}_{1 r}-{q}_{min}\right) \left({I}_{max}-{I}_{min}\right) / \left({q}_{max}-{q}_{min}\right) ,$
where the I is the target current, the Iₘᵢₙ is a minimum current of the solenoid valve, the Iₘₐₓ is a maximum current of the solenoid valve, the qₘᵢₙ is a minimum displacement of the corresponding plunger pump, the qₘₐₓ is the reference displacement, and the q₁ᵣ is the target displacement.

The above are merely preferred embodiments of the present invention, and are not intended to limit the patent scope of the present invention thereby. Any equivalent structural or equivalent process transformations made using the contents of the specification and drawings of the present invention, or direct or indirect application in other related technical fields, shall all be likewise included within the patent protection scope of the present invention.

## Claims

1. A control method for an electric excavator system, wherein the electric excavator system comprises a motor and a plurality of plunger pumps drivingly connected to the motor,
the control method comprising:
acquiring a pump body pressure and a pilot pressure of each of the plunger pumps;
determining a required flow rate of each of the plunger pumps according to the pump body pressure and the pilot pressure of each of the plunger pumps;
determining a preliminary calculated rotational speed of the motor according to the required flow rate of each of the plunger pumps;
determininga calculated rotational speed of the motor according to the preliminary calculated rotational speed;
determining a rotational speed adjustment strategy of the motor according to the calculated rotational speed, and controlling the motor to perform rotational speed adjustment according to the rotational speed adjustment strategy; and
determining a displacement adjustment strategy of each of the plunger pumps according to the calculated rotational speed and the required flow rate of each of the plunger pumps, and controlling each corresponding plunger pump to perform displacement adjustment according to the displacement adjustment strategy of each of the plunger pumps.

2. The control method for the electric excavator system according to claim 1, wherein the determining the preliminary calculated rotational speed of the motor according to the required flow rate of each of the plunger pumps comprises:
selecting a maximum value from a plurality of required flow rates as a reference flow rate;
and
calculating the preliminary calculated rotational speed according to the reference flow rate.

3. The control method for the electric excavator system according to claim 2, wherein the calculating the preliminary calculated rotational speed according to the reference flow rate comprises:
acquiring a set displacement of a plunger pump corresponding to the reference flow rate;
selecting a maximum value from the set displacement as a reference displacement; and
calculating the preliminary calculated rotational speed according to the reference flow rate and the reference displacement.

4. The control method for the electric excavator system according to claim 1, wherein the determining the calculated rotational speed of the motor according to the preliminary calculated rotational speed comprises:
determining a weight adjustment coefficient;
acquiring a limiting parameter of the motor; and
determining the calculated rotational speed of the motor according to the preliminary calculated rotational speed, the weight adjustment coefficient, and the limiting parameter.

5. The control method for the electric excavator system according to claim 4, wherein the determining the weight adjustment coefficient comprises:
acquiring a starting adjustment pressure and a maximum pressure of a system composed of the plurality of plunger pumps;
determining an average pressure of each of the plunger pumps according to the pump body pressure of each of the plunger pumps; and
determining the weight adjustment coefficient according to the average pressure of each of the plunger pumps and the starting adjustment pressure.

6. The control method for the electric excavator system according to claim 5, wherein the determining the weight adjustment coefficient according to the average pressure of each of the plunger pumps and the starting adjustment pressure comprises:
when the average pressure of each of the plunger pumps is greater than the starting adjustment pressure, determining the weight adjustment coefficient as a first fixed value; and
when the average pressure of each of the plunger pumps is less than the starting adjustment pressure, calculating and determining the weight adjustment coefficient according to the average pressure of each of the plunger pumps, the starting adjustment pressure, and the maximum pressure.

7. The control method for the electric excavator system according to claim 4, wherein the limiting parameter comprises a limiting torque and a limiting power of the motor.

8. The control method for the electric excavator system according to claim 1, wherein the determining the rotational speed adjustment strategy of the motor according to the calculated rotational speed, and controlling the motor to perform rotational speed adjustment according to the rotational speed adjustment strategy comprises:
acquiring a current rotational speed of the motor;
successively increasing from the current rotational speed by a preset rotational speed step value to obtain a plurality of process target rotational speeds between the current rotational speed and the calculated rotational speed; and
controlling the motor to change rotational speed stepwise from the current rotational speed to the calculated rotational speed according to the plurality of process target rotational speeds.

9. The control method for the electric excavator system according to claim 8, wherein the determining the displacement adjustment strategy of each of the plunger pumps according to the calculated rotational speed and the required flow rate of each of the plunger pumps, and controlling each corresponding plunger pump to perform displacement adjustment according to the displacement adjustment strategy of each of the plunger pumps comprises:
acquiring and determining a calculated displacement of each of the plunger pumps and a plurality of process target displacements according to the calculated rotational speed, the plurality of process target rotational speeds, and the required flow rate of each of the plunger pumps;
calculating and determining a calculated current of a solenoid valve of each of the plunger pumps and a plurality of target currents according to the calculated displacement of each of the plunger pumps and the plurality of process target displacements; and
controlling a current of the solenoid valve of each of the plunger pumps to change stepwise to the calculated current according to the plurality of target currents.

10. An electric excavator system, comprising:
a plurality of plunger pumps, each of the plunger pumps being provided with a solenoid valve;
a motor, configured to control rotational speeds of the plurality of plunger pumps; and
a control device, electrically connected to the plurality of plunger pumps and the motor, wherein the control device comprises a memory, a processor, and a control program for the electric excavator system stored on the memory and executable on the processor, and the control program for the electric excavator system is configured to implement steps of the control method for the electric excavator system according to any one of claims 1 to 9.
